(19) Europäisches Patentamt
European Patent Office
Office européen des brevets

(11) **EP 2 487 375 B1**

(12) **EUROPÄISCHE PATENTSCHRIFT**

(45) Veröffentlichungstag und Bekanntmachung des Hinweises auf die Patenterteilung:
**28.10.2015 Patentblatt 2015/44**

(51) Int Cl.:
*F16B 31/02* *(2006.01)*       *F16B 33/00* *(2006.01)*

(21) Anmeldenummer: **12150707.3**

(22) Anmeldetag: **11.01.2012**

(54) **Drehmomentbegrenzte Befestigungsvorrichtung**

Torque-limited fastening device

Dispositif de fixation limité en couple

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.02.2011 DE 102011003835**

(43) Veröffentlichungstag der Anmeldung:
**15.08.2012 Patentblatt 2012/33**

(73) Patentinhaber: **HILTI Aktiengesellschaft**
**9494 Schaan (LI)**

(72) Erfinder:
 • **Schaeffer, Marc**
  **6800 Feldkirch-Nofels (AT)**
 • **Goldt, Mathias**
  **6800 Feldkirch (AT)**
 • **Selb, Michael**
  **6800 Feldkirch (AT)**

(74) Vertreter: **Hilti Aktiengesellschaft**
**Corporate Intellectual Property**
**Feldkircherstrasse 100**
**Postfach 333**
**9494 Schaan (LI)**

(56) Entgegenhaltungen:
**GB-A- 684 821     US-A- 3 742 583**

**Beschreibung**

Die Erfindung betrifft eine drehmomentbegrenzte Befestigungsvorrichtung mit einem ersten Kopfteil, welches zumindest ein Formelement zur formschlüssigen Verbindung mit einem Befestigungswerkzeug aufweist, und einem zweiten Kopfteil, welches zumindest ein Gewinde aufweist, wobei die beiden Kopfteile unter Bildung zumindest einer Sollbruchstelle miteinander verbunden sind, welche bei einem Grenzdrehmoment zwischen den beiden Kopfteilen bricht, so dass eine dem ersten Kopfteil zugeordnete erste Bruchfläche und eine dem zweiten Kopfteil zugeordnete zweite Bruchfläche entsteht.

Eine gattungsgemässe Vorrichtung geht aus der US 3,742,583 A hervor. Die GB 684,821 A beschreibt eine Schraube mit einer Abdeckung aus einem korrosionsbeständigen Material.

Es sind Abreissmuttern oder Abreissschrauben mit zwei Kopfteilen bekannt, die über eine Schweissverbindung miteinander verbunden sind. Beim Anbringen dieser Muttern bzw. Schrauben wird mittels eines Befestigungswerkzeugs ein Drehmoment auf das erste Kopfteil aufgebracht, wobei das Drehmoment zu Beginn des Befestigungsvorganges über eine Verbindung auf das zweite Kopfteil übertragen wird. Wird am Ende des Befestigungsvorganges ein vorgegebenes Grenzdrehmoment erreicht, so schert das erste Kopfteil an der Verbindung vom zweiten Kopfteil ab. Durch dieses Abscheren wird das maximal auf das zweite Kopfteil wirkende Drehmoment begrenzt.

Eine Abreissmutter geht beispielsweise aus der US 2002/076295 A1 hervor. Eine Abreissschraube ist aus der GB1411151A bekannt.

Aus Kostengründen sind Abreissmuttern häufig aus einem vergleichsweise korrosionsanfälligen Grundmaterial hergestellt, welches durch eine Oberflächenbehandlung korrosionsgeschützt ist. Bei der Verwendung solcher Abreissmuttern konnten jedoch unter Umständen trotz der Oberflächenbehandlung Korrosionsprobleme beobachtet werden.

Aufgabe der Erfindung ist es, eine drehmomentbegrenzte Befestigungsvorrichtung anzugeben, welche einerseits besonders günstig in der Herstellung und andererseits besonders korrosionsbeständig ist.

Die Aufgabe ist durch die Merkmale des unabhängigen Anspruchs gelöst. Vorteilhafte Weiterbildungen sind in den Unteransprüchen dargelegt.

Die erfindungsgemässe Vorrichtung ist dadurch gekennzeichnet, dass zumindest das zweite Kopfteil, vorzugsweise auch das erste Kopfteil, ein innenliegendes Grundmaterial aufweist, welches mit einer korrosionshemmenden Oberflächenbeschichtung versehen ist, und dass zumindest die dem zweiten Kopfteil zugeordnete zweite Bruchfläche eine höhere Korrosionsbeständigkeit aufweist als eine unbeschichtete Oberfläche des Grundmaterials des zweiten Kopfteils.

Die Erfindung hat erkannt, dass die bei Abreissmuttern nach dem Stand der Technik beobachtete Korrosionsproblematik auf die Bruchflächen zurückgehen kann, die beim Abscheren der beiden Kopfteile an der Sollbruchstelle entstehen. Denn da diese Bruchflächen erst bei der bestimmungsgemässen Anwendung der Vorrichtung, nämlich beim Erreichen des Grenzdrehmoments und dem Bruch der Sollbruchstelle, zutage treten, kann dort ein Oberflächenkorrosionsschutz, der zuvor im Rahmen der Fertigung der Vorrichtung aufgebracht wurde, nicht wirken. Nach dem Stand der Technik können also an den Bruchflächen Lücken im Korrosionsschutz entstehen. Die Bruchflächen können dann einen Ausgangspunkt für Korrosion bilden, welche von dort in das Grundmaterial der Kopfteile vordringen kann und mit zunehmender Zeit auch die zu den Bruchflächen benachbarten, nur oberflächlich geschützten Bereiche erfassen kann.

Hier setzt die Erfindung an und sieht vor, das im Bereich der Sollbruchstelle verwendete Material so zu modifizieren, dass die beim Bruch der Sollbruchstelle zutage tretenden Bruchflächen eine höhere Korrosionsbeständigkeit haben als das blanke Grundmaterial der Kopfteile. Damit wirken die Bruchflächen ebenfalls korrosionshemmend, so dass erfindungsgemäss nun auch nach dem Bruch der Sollbruchstelle ein lückenloser, durchgehender Korrosionsschutz gegeben ist. Erfindungsgemäss wird somit ein besonders korrosionsbeständiges Bauteil erhalten, das gleichzeitig besonders kostengünstig ist, da der Korrosionsschutz über die Beschaffenheit der oberflächennahen Bereiche realisiert wird, und da somit als Grundmaterial für die Kopfteile weiterhin ein vergleichsweise kostengünstiger, korrosionsanfälliger Werkstoff gewählt werden kann.

Mit anderen Worten kann ein Grundgedanke der Erfindung darin gesehen werden, die Materialbeschaffenheit der Befestigungsvorrichtung so zu wählen, so dass ein Bruch an der Sollbruchstelle zumindest am zweiten Kopfteil eine höher korrosionsbeständige Bruchfläche frei-gibt als ein durch das Grundmaterial des zweiten Kopfteils hindurch verlaufender, fiktiver Bruch. Somit wirkt die an der Sollbruchstelle entstehende zweite Bruchfläche als Korrosionsschutz für das Grundmaterial des zweiten Kopfteils.

Das zweite Kopfteil mit dem Gewinde hat nach dem Setzen der Befestigungsvorrichtung in der Regel eine lasttragende Funktion, wohingegen das erste Kopfteil nur beim Setzen zum Einsatz kommt und nach dem Setzen verloren ist. Daher sind in der Regel auf Dauer gesehen insbesondere die Korrosionseigenschaften des zweiten Kopfteils relevant. Sollte es aber auch auf die Korrosionseigenschaften des ersten Kopfteils ankommen, kann auch vorgesehen sein, dass die dem ersten Kopfteil zugeordnete erste Bruchfläche eine höhere Korrosionsbeständigkeit aufweist als eine unbeschichtete Oberfläche des Grundmaterials des ersten Kopfteils. Im Hinblick auf eine besonders einfache Fertigung weisen die beiden Kopfteile zweckmässigerweise dasselbe Grundmaterial auf.

Unter dem Grundmaterial kann nach der Erfindung insbesondere das Material verstanden welches sich im Inneren, d.h. im Kern der Vorrichtung befindet. Soweit eine Oberflächenbeschichtung vorgesehen ist, sind Grundmaterial und Oberflächenmaterial verschieden. Anderenfalls können das Grundmaterial und das Oberflächenmaterial identisch sein.

Die erfindungsgemässe Vorrichtung und/oder die Kopfteile können ein Metallmaterial, insbesondere Stahl aufweisen. Unter der Korrosionsbeständigkeit kann erfindungsgemäss insbesondere die Wirksumme (Pitting Resistance Equivalent - PRE) verstanden werden, wobei sich die Wirksumme wie folgt ergibt:

$$PRE = gew\%Cr + 3{,}3\ gew\%\ Mo + 30\ gew\%N$$

(wobei gew%Cr, gew%Mo und gew%N die gewichtsprozentmässigen Gehalte von Chrom, Molybdän und Stickstoff im Eisen sind). Eine erhöhte Korrosionsbeständigkeit einer Fläche kann demgemäss eine höhere Wirksumme beinhalten. Für eine erhöhte Korrosionsbeständigkeit kann insbesondere rostfreier Stahl oder Zink zum Einsatz kommen.

Die Erfindung betrifft auch die Verwendung einer erfindungsgemässen Vorrichtung in einer für die Vorrichtung korrosiven Umgebung, beispielsweise in der Atmosphäre. Der Begriff Korrosionsbeständigkeit kann dann die Korrosionsbeständigkeit gegenüber der korrosiven Umgebung beinhalten. Unter der Korrosionsbeständigkeit kann insbesondere die Beständigkeit gegenüber Säurekorrosion verstanden werden.

Die korrosionshemmende Oberflächenbeschichtung des zweiten und/oder des ersten Kopfteils kann insbesondere eine Zinkschicht oder eine Lackschicht sein.

Eine bevorzugte Ausführungsform der Erfindung besteht darin, dass die beiden Kopfteile über zumindest ein Verbindungsteil miteinander verbunden sind, an dem die Sollbruchstelle ausgebildet ist, und dass das Verbindungsteil ein höher korrosionsbeständiges Grundmaterial aufweist als das zweite Kopfteil und insbesondere auch als das erste Kopfteil. Insbesondere kann diese Ausführungsform beinhalten, dass die gesteigerte Korrosionsbeständigkeit an den Bruchflächen der Sollbruchstelle nicht durch Oberflächenmodifikationen, sondern durch eine örtliche Variation der Zusammensetzung des unterhalb der Oberfläche liegenden Grundmaterials erreicht wird. Gemäss dieser Ausführungsform ist also ein Verbindungsteil vorgesehen, welches ein anderes Grundmaterial als das erste und/oder das zweite Kopfteil aufweist. Das Verbindungsteil kann stoffschlüssig mit den Kopfteilen verbunden sein, z.B. durch eine Schweissverbindung. Beispielsweise kann das Verbindungsteil für eine erhöhte Korrosionsbeständigkeit rostfreien Stahl aufweisen.

Alternativ oder zusätzlich kann vorgesehen sein, dass die beiden Kopfteile mittels zumindest eines Zusatzwerkstoffes stoffschlüssig miteinander verbunden sind, wobei die Sollbruchstelle am Zusatzwerkstoff ausgebildet ist. Sofern die stoffschlüssige Verbindung eine Lötverbindung ist, kann es sich bei dem Zusatzwerkstoff um ein Lötmittel handeln. Ist die Stoffschlüssige Verbindung eine Klebeverbindung, kann es sich bei dem Zusatzwerkstoff um einen Klebstoff handeln. Diese Ausführungsform kann insbesondere beinhalten, dass die gesteigerte Korrosionsbeständigkeit an der Sollbruchstelle durch Oberflächeneffekte erzielt wird. Beispielsweise kann vorgesehen sein, dass der Zusatzwerkstoff nicht nur für den Stoffschluss sorgt, sondern dass er nach dem Brechen der Sollbruchstelle, d.h. dem Brechen der Stoffschlussverbindung, auch einen Korrosionsschutz an den entstehenden Bruchflächen bewirkt.

Die Sollbruchstelle kann insbesondere dadurch gebildet sein, dass das Verbindungsteil bzw. der Zusatzwerkstoff gegenüber der Umgebung eine geringere Festigkeit und/oder Dehnung aufweist.

Beispielsweise kann vorgesehen sein, dass die drehmomentbegrenzte Befestigungsvorrichtung als Abreissmutter ausgebildet ist, und dass das Gewinde am zweiten Kopfteil ein Innengewinde ist. Die drehmomentbegrenzte Befestigungsvorrichtung kann aber auch als Abreisschraube ausgebildet sein, wobei das Gewinde am zweiten Kopfteil dann ein Aussengewinde ist.

Das Formelement dient zum Herstellen einer drehfesten Formschlussverbindung mit dem Befestigungswerkzeug, bei der ein Drehmoment vom Befestigungswerkzeug auf das erste Kopfteil übertragbar ist. Das Formelement kann beispielsweise ein Aussenmehrkant oder auch ein Innenmehrkant, insbesondere ein Sechskant sein. Das Formelement kann aber beispielsweise auch ein Schlitz, insbesondere ein Kreuzschlitz sein.

Die Erfindung wird nachfolgend anhand bevorzugter Ausführungsbeispiele näher erläutert, die schematisch in den beiliegenden Figuren dargestellt sind. In den Figuren zeigen schematisch:

Fig. 1 ein erstes Ausführungsbeispiel einer drehmomentbegrenzten Befestigungsvorrichtung vor dem Erreichen des Grenzdrehmoments, rechts in Seitenansicht und links in Schnittansicht;

Fig. 2 die Befestigungsvorrichtung aus Fig. 1 nach Erreichen des Grenzdrehmoments;

Fig. 3 ein zweites Ausführungsbeispiel einer drehmomentbegrenzten Befestigungsvorrichtung vor dem Erreichen des Grenzdrehmoments, rechts in Seitenansicht und links in Schnittansicht; und

Fig. 4 die Befestigungsvorrichtung aus Fig. 3 nach Erreichen des Grenzdrehmoments.

Gleich wirkende Elemente sind in den Figuren mit denselben Bezugzeichen gekennzeichnet.

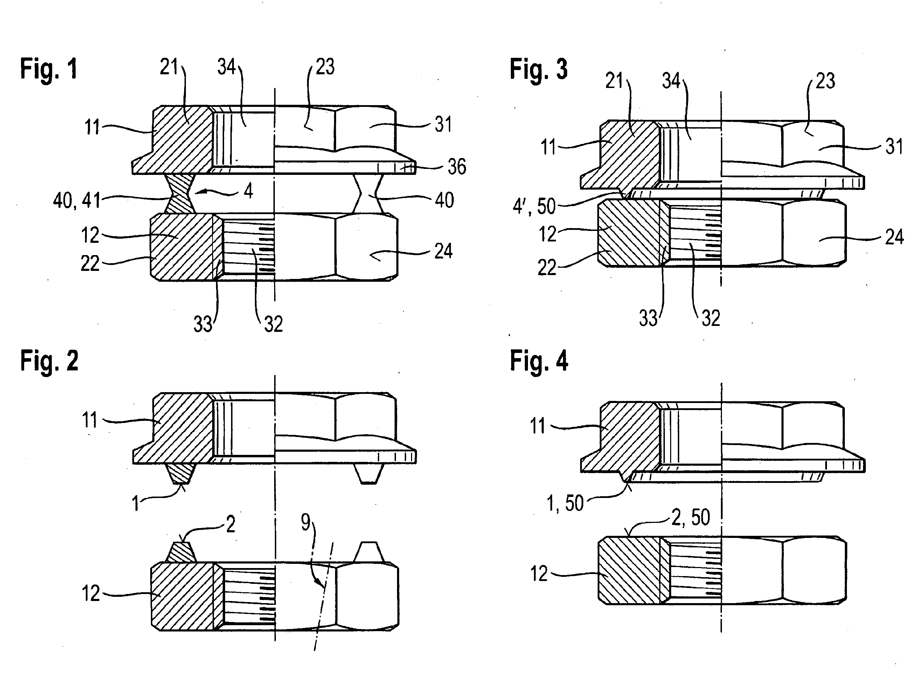

Ein erstes Ausführungsbeispiel einer als Abreissmutter ausgebildeten drehmomentbegrenzten Befestigungsvorrichtung ist in den Figuren 1 und 2 dargestellt, und zwar in Figur 1 vor Erreichen des Grenzdrehmoments und in Fig. 2 nach Erreichen des Grenzdrehmoments und nach dem Abscheren der beiden Kopfteile

Die dargestellte Vorrichtung weist ein erstes Kopfteil 11 auf, an dessen Aussenseite ein als Mehrkant, insbesondere Sechskant, ausgebildetes Formelement 31 zum Ansetzen eines nicht dargestellten Drehwerkzeuges gebildet ist. Ferner weist Vorrichtung ein zweites Kopfteil 12 mit einer Durchgangsbohrung 32 auf, in der ein Innengewinde 33 ausgebildet ist. Das erste Kopfteil 11 weist ebenfalls eine Durchgangsbohrung 34 auf, die mit der Durchgangsbohrung 32 fluchtet, deren lichte Weite jedoch grösser als die lichte Weite des Innengewindes 33 des zweiten Kopfteils 12 ist, damit eine mit dem Innengewinde 33 des zweiten Kopfteils 12 korrespondierende Gewindestange frei durch die Durchgangsbohrung 34 im ersten Kopfteil 11 durchtreten kann. An der Aussenseite des ersten Kopfteils 11 ist ein radial vorstehender Kragen 36 angeordnet, der ein Angriff des am ersten Kopfteil 11 angreifenden Befestigungswerkzeuges am zweiten Kopfteil 12 verhindert.

Die beiden Kopfteile 11 und 12 bestehen in ihrem jeweiligen Kern aus einem vergleichsweise stark korrosionsanfälligen Grundmaterial 21 beziehungsweise 22, beispielsweise aus unlegiertem Stahl. Um die benötigte Korrosionsbeständigkeit zu gewährleisten, sind die Grundmaterialien jeweils mit einer Oberflächenbeschichtung 23 beziehungsweise 24 versehen.

Beim Ausführungsbeispiel der Figuren 1 und 2 sind die beiden Kopfteile 11 und 12 zunächst (vgl. Fig. 1) über Verbindungsteile 40 verbunden. Die Verbindungsteile können mit den beiden Kopfteilen 11 und 12 beispielsweise verschweisst oder verklebt sein. Die Verbindungsteile 40 weisen jeweils eine Sollbruchstelle 4 auf, die beispielhaft als Verjüngung dargestellt ist. Erreicht ein mittels des Drehwerkzeuges aufgebrachtes, zwischen den beiden Kopfteilen 11 und 12 wirkendes Drehmoment ein Grenzdrehmoment, so gibt die Sollbruchstelle 4 nach und die beiden Kopfteile 11 und 12 werden voneinander getrennt (vgl. Fig. 2). Dabei entstehen am Verbindungsteil 40 korrespondierende Bruchflächen 1 und 2, wobei die erste Bruchfläche 1 dem ersten Kopfteil 11 zugeordnet ist, und die zweite Bruchfläche 2 dem zweiten Kopfteil 12.

Die beim Bruch der Verbindungsteile 40 an den Sollbruchstellen 4 entstehenden Bruchflächen 1 und 2 werden durch das Grundmaterial 41 der Verbindungsteile 40 gebildet, welches beim Bruch der Verbindungsteile 40 zutage tritt. Erfindungsgemäss besteht dieses Grundmaterial 41 aus einem korrosionsbeständigeren Werkstoff verglichen mit dem Grundmaterial 21, 22 der beiden Kopfteile 11, 12. Beispielsweise kann das Grundmaterial 41 der Verbindungsteile 40 Edelstahl sein. Aufgrund der erhöhten Korrosionsbeständigkeit des Grundmaterials 41 der Verbindungsteile 40 bilden die beim Bruch der Verbindungsteile 40 entstehenden Bruchflächen 1 und 2 im Bruchbereich einen Korrosionsschutz für die beiden Kopfteile 11, 12. Während der Korrosionsschutz der Kopfteile 11, 12 ausserhalb des Bruchbereichs also durch die jeweiligen Oberflächenbeschichtungen 23 bzw. 24 gewährleistet wird, ergibt sich der Korrosionsschutz im Bruchbereich, wo die Oberflächenbeschichtungen 23 bzw. 24 nicht vorhanden sind, aus der erhöhten Korrosionsbeständigkeit des Grundmaterials 41 der Verbindungsteile 40.

Da die Verbindungsteile 40 ein korrosionsbeständigeres Grundmaterial 41 aufweisen als das zweite Kopfteil 12, sind die an den Verbindungsteilen 40 entstehenden Bruchflächen 2 des zweiten Kopfteils 12 korrosionsbeständiger als eine Bruchfläche, die bei einem fiktiven Bruch 9 durch das zweite Kopfteil 22 hindurch entstünde.

Ein weiteres Ausführungsbeispiel der Erfindung ist in den Figuren 3 und 4 dargestellt, und zwar in Figur 3 vor Erreichen des Grenzdrehmoments und in Figur 4 nach Erreichen des Grenzdrehmoments und nach dem Abscheren der beiden Kopfteile. Das Ausführungsbeispiel der Figuren 3 und 4 unterscheidet sich vom Ausführungsbeispiel der Figuren 1 und 2 dadurch, dass gemäss Figuren 3 und 4 kein materialverschiedenes Verbindungsteil vorhanden ist, sondern dass die beiden Kopfteile 11 und 12 mittels eines Zusatzwerkstoffs 50, beispielsweise eines Klebstoffs oder eines Lötmittels, unmittelbar stoffschlüssig gefügt sind. An der entsprechenden Fügestelle ist die Sollbruchstelle 4' gebildet.

Nach dem Bruch der Sollbruchstelle 4' bei Erreichen des Grenzdrehmoments (vgl. Fig. 4) haftet der Zusatzwerkstoff 50 an den entstehenden Bruchflächen 1 und 2 an und sorgt dort für einen Korrosionsschutz des Grundmaterials 21 beziehungsweise 22 der Kopfteile 11 und 12. Der Zusatzwerkstoff kann beispielsweise Zink oder/und ein Harz aufweisen.

**Patentansprüche**

**1.** Drehmomentbegrenzte Befestigungsvorrichtung mit
einem ersten Kopfteil (11), welches zumindest ein Formelement (31) zur formschlüssigen Verbindung mit einem Befestigungswerkzeug aufweist, und

einem zweiten Kopfteil (12), welches zumindest ein Gewinde (33) aufweist,
wobei die beiden Kopfteile (11, 12) unter Bildung zumindest einer Sollbruchstelle (4) miteinander verbunden sind, welche bei einem Grenzdrehmoment zwischen den beiden Kopfteilen (11, 12) bricht, so dass eine dem ersten Kopfteil (11) zugeordnete erste Bruchfläche (1) und eine dem zweiten Kopfteil (12) zugeordnete zweite Bruchfläche (2) entsteht,
**dadurch gekennzeichnet, dass**
zumindest das zweite Kopfteil (12) ein innenliegendes Grundmaterial (22) aufweist, welches mit einer korrosionshemmenden Oberflächenbeschichtung (24) versehen ist, und dass
zumindest die dem zweiten Kopfteil (12) zugeordnete zweite Bruchfläche (2) eine höhere Korrosionsbeständigkeit aufweist als eine unbeschichtete Oberfläche des Grundmaterials (22) des zweiten Kopfteils (12).

2. Vorrichtung nach Anspruch 1, **dadurch gekennzeichnet,**
   **dass** die beiden Kopfteile (11, 12) über zumindest ein Verbindungsteil (40) miteinander verbunden sind, an dem die Sollbruchstelle (4) ausgebildet ist, und
   **dass** das Verbindungsteil (40) ein höher korrosionsbeständiges Grundmaterial (41) aufweist als das zweite Kopfteil (12).

3. Vorrichtung nach Anspruch 1, **dadurch gekennzeichnet,**
   **dass** die beiden Kopfteile (11, 12) mittels zumindest eines Zusatzwerkstoffes stoffschlüssig miteinander verbunden sind, wobei die Sollbruchstelle (4') am Zusatzwerkstoff (50) ausgebildet ist.

4. Vorrichtung nach einem der vorstehenden Ansprüche, **dadurch gekennzeichnet, dass** sie als Abreissmutter ausgebildet ist, und dass das Gewinde (33) am zweiten Kopfteil (12) ein Innengewinde ist.

5. Vorrichtung nach einem der vorstehenden Ansprüche, **dadurch gekennzeichnet, dass** das Formelement (31) ein Aussenmehrkant ist.

## Claims

1. Torque-limited fastener comprising
   a first head part (11) having at least one shaped element (31) for positive connection to a fastening tool and
   a second head part (12) having at least one thread (33),
   the two head parts (11, 12) being connected together so as to form at least one predetermined breaking point (4) that breaks at a limiting torque between the two head parts (11, 12) so as to produce a first fracture surface (1) associated with the first head part (11) and a second fracture surface (2) associated with the second head part (12),
   **characterised in that**
   at least the second head part (12) has an inner base material (22) provided with a corrosion-inhibiting surface coating (24) and that
   at least the second fracture surface (2) associated with the second head part (12) displays greater corrosion resistance than an uncoated surface of the base material (22) of the second head part (12).

2. Device according to claim 1, **characterised in that** the two head parts (11, 12) are connected together via at least one connecting part (40) on which the predetermined breaking point (4) is formed and that the connecting part (40) has a more corrosion-resistant base material (41) than the second head part (12).

3. Device according to claim 1, **characterised in that** the two head parts (11, 12) are connected together by a material bond by means of at least one additional material, the predetermined breaking point (4') being formed on the additional material (50).

4. Device according to one of the preceding claims, **characterised in that** it is designed as a shear nut and that the thread (33) on the second head part (12) is an internal thread.

5. Device according to one of the preceding claims, **characterised in that** the shaped element (31) is an external polygon.

EP 2 487 375 B1

**Revendications**

**1.** Dispositif de fixation limité en couple, ayant :

une première partie de tête (11) comportant au moins un élément mis en forme (31) en vue d'un assemblage par complémentarité de formes avec un outil de fixation, et
une seconde partie de tête (12) comportant au moins un filetage (33),
dans lequel les deux parties de tête (11, 12) sont reliées l'une à l'autre en formant au moins un point de rupture programmée (4), lequel point rompt lorsqu'un couple limite est appliqué entre les deux parties de tête (11, 12) de telle sorte qu'une première surface de rupture (1) associée à la première partie de tête (11) et une seconde surface de rupture (2) associée à la seconde partie de tête (12) sont formées,
**caractérisé en ce que**
au moins la seconde partie de tête (12) comporte un matériau de base (22) disposé à l'intérieur, lequel matériau de base est pourvu d'un revêtement de surface inhibiteur de corrosion (24), et
**en ce qu'**au moins la seconde surface de rupture (2) associée à la seconde partie de tête (12) a une résistance à la corrosion plus élevée qu'une surface non recouverte du matériau de base (22) de la seconde partie de tête (12).

**2.** Dispositif selon la revendication 1, **caractérisé en ce que** les deux parties de tête (11, 12) sont reliées l'une à l'autre par au moins une pièce de liaison (40) sur laquelle est formé le point de rupture programmée (4), et **en ce que** la pièce de liaison (40) comporte un matériau de base (41) plus résistant à la corrosion que la seconde partie de tête (12).

**3.** Dispositif selon la revendication 1, **caractérisé en ce que** les deux parties de tête (11, 12) sont reliées l'une à l'autre par un assemblage par combinaison de matière au moyen d'au moins un matériau supplémentaire, dans lequel le point de rupture programmée (4') est formé sur le matériau supplémentaire (50).

**4.** Dispositif selon l'une des revendications précédentes, **caractérisé en ce qu'**il est formé comme un écrou de rupture par arrachement, et **en ce que** le filetage (33) sur la seconde partie de tête (12) est un filetage intérieur.

**5.** Dispositif selon l'une des revendications précédentes, **caractérisé en ce que** l'élément mis en forme (31) est un polygone disposé à l'extérieur.

**Fig. 1**

21  34  23

11

31

40, 41  4  40

12  24

22

33  32

**Fig. 2**

11

1

2  9

12

**Fig. 3**

21  34  23

11

31

4', 50

12  24

22

33  32

**Fig. 4**

11

1, 50

2, 50

12

EP 2 487 375 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3742583 A
- GB 684821 A
- US 2002076295 A1
- GB 1411151 A